# EUROPEAN PATENT APPLICATION

(11) **EP 4 439 398 A2**
(43) Date of publication of application: **02.10.2024**
(21) Application number: 24194223.4
(22) Date of filing: 08.05.2020
(51) Int. Cl.: G06N 3/098

(54) **ARTIFICIAL INTELLIGENCE DEVICE FOR RECOGNIZING SPEECH AND METHOD THEREOF**

(62) Divisional of application: 20934832.5
(71) Applicant: LG Electronics Inc., Yeongdeungpo-gu Seoul 07336 (KR)
(72) Inventor: MIN, Sunki, 06772 Seoul (KR)
(74) Representative: Schornack, Oliver

(57) **Abstract**

An embodiment of the present disclosure provides an artificial intelligence device for recognizing speech, the artificial intelligence device comprising: a memory for storing an intention mapping table including a mapping item obtained by mapping text and intention information; and a processor which receives first speech data, generates first intention information corresponding to the first speech data by using the intention mapping table and a natural language processing (NLP) engine, receives second speech data if speech recognition on the first speech data has failed, generates second intention information corresponding to the second speech data, and adds, to the intention mapping table, a mapping item including the second intention information and first text converted from the first speech data, if speech recognition on the second speech data has been successfully performed.

## Description

### Technical Field

The disclosure relates to an artificial intelligence device and method for recognizing speech.

### Background Art

Recently, the number of devices that receive sound input and perform control is increasing. A device such as an artificial intelligence speaker or a smart phone recognizes a user's uttered speech and performs a control corresponding to a result of recognition or provides a response.

For services based on speech recognition, service satisfaction varies greatly depending on speech recognition performance. In addition, since users have different pronunciation, intonation, or vocabulary, speech recognition performance varies depending on users. Speech recognition models based on deep learning cannot accurately infer untrained data. However, when the record of speech recognition failure is used, speech recognition performance may be improved.

### Disclosure

### Technical Problem

The present disclosure provides an artificial intelligence device and method for determining intention information corresponding to a user's uttered speech using a record in which speech recognition has failed and recognizing speech.

### Technical Solution

An embodiment of the present disclosure provides an artificial intelligence (AI) apparatus and method which receive first speech data, generate first intention information corresponding to the first speech data using the intention mapping table and a natural language processing (NLP) engine, receive second speech data when speech recognition for the first speech data has failed, generate second intention information corresponding to the second speech data, and add a first mapping item including the first text converted from the first speech data and the second intention information to the intention mapping table when speech recognition for the second speech data has succeeded to recognize speech.

In this case, only when the second intention information is generated using the NLP engine, a mapping item including the first text and the second intention information may be added to the intention mapping table.

In this case, the intention mapping table may further include a counter corresponding to each mapping item, and when the processor adds the first mapping item to the intention mapping table, if the first mapping item is included in the intention mapping table, the intention mapping table may increase the counter value for the first mapping item by 1.

In this case, the processor may determine intention information of the second mapping item as the first intention information, when a second mapping item having a counter value equal to or greater than a first reference counter value and corresponding to the first text converted from the first speech data is included in the intention mapping table.

In this case, the processor may generate training data corresponding to the second mapping item and update the NLP engine using the generated training data when the counter value of the second mapping item is greater than a third counter value, and

In this case, the intention mapping table may include a recommended application, and the processor may suggest a recommended application corresponding to the second intention information.

### Advantageous Effects

According to various embodiments of the present disclosure, it is possible to more accurately determine intention information corresponding to a user's uttered speech by using a record in which the speech recognition has failed to improve the performance of the speech recognition model even without the addition of training data, even when speech of pronunciation, intonation, or vocabulary fails to be recognized.

Further, according to various embodiments of the present disclosure, it is possible to update the NLP engine and improve its performance without a separate user intervention by automatically generating training data to be used for training of the NLP engine from a record in which speech recognition has failed.

### Description of Drawings

Fig. 1 is a block diagram illustrating an AI device according to an embodiment of the present invention.
Fig. 2 is a block diagram illustrating an AI server according to an embodiment of the present invention.
Fig. 3 is a view illustrating an AI system according to an embodiment of the present invention.
Fig. 4 is a block diagram illustrating an AI device according to an embodiment of the present invention.
FIG. 5 is a block diagram illustrating an artificial intelligence system according to an embodiment of the present disclosure.
FIG. 6 is an operational flowchart illustrating a method of recognizing speech according to an embodiment of the present disclosure.
FIG. 7 is an operational flowchart illustrating an example of a step of generating first intention information corresponding to first speech data using the intention mapping table shown in FIG. 6 (S603).
FIG. 8 is a diagram illustrating an embodiment of the present disclosure.
FIG. 9 is a diagram illustrating an example of an intention mapping table according to an embodiment of the present disclosure.
FIG. 10 is an operational flowchart illustrating an example of step of determining the first intention information shown in FIG. 7 as intention information of a mapping item corresponding to the first text (S705).
FIG. 11 is an operational flowchart illustrating an example of an operation of adding first text and second intention information corresponding to first speech data shown in FIG. 6 to an intention mapping table (S617).
FIG. 12 is a diagram illustrating an embodiment of the present disclosure.
FIG. 13 is a diagram illustrating an embodiment of the present disclosure.
FIG. 14 is a diagram illustrating an embodiment of the present disclosure.
FIG. 15 is a diagram illustrating an example of an intention mapping table according to an embodiment of the present disclosure.
FIG. 16 is an operational flowchart illustrating a method of providing a recommended application according to an embodiment of the present disclosure.
FIGS. 17 and 18 are diagrams illustrating an embodiment of recognizing a speech using the intention mapping table shown in FIG. 15.

### Mode for Invention

Hereinafter, embodiments of the present disclosure are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the invention in unnecessary detail. Additionally, the accompanying drawings are used to help easily understanding embodiments disclosed herein but the technical idea of the present disclosure is not limited thereto. It should be understood that all of variations, equivalents or substitutes contained in the concept and technical scope of the present disclosure are also included.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.

### < Artificial Intelligence (AI)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of learning an artificial neural network in a state in which a label for training data is given, and the label may mean the correct answer (or result value) that the artificial neural network must infer when the training data is input to the artificial neural network. The unsupervised learning may refer to a method of learning an artificial neural network in a state in which a label for training data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning. In the following, machine learning is used to mean deep learning.

### <Robot>

A robot may refer to a machine that automatically processes or operates a given task by its own ability. In particular, a robot having a function of recognizing an environment and performing a self-determination operation may be referred to as an intelligent robot.

Robots may be classified into industrial robots, medical robots, home robots, military robots, and the like according to the use purpose or field.

The robot includes a driving unit may include an actuator or a motor and may perform various physical operations such as moving a robot joint. In addition, a movable robot may include a wheel, a brake, a propeller, and the like in a driving unit, and may travel on the ground through the driving unit or fly in the air.

### <Self-Driving>

Self-driving refers to a technique of driving for oneself, and a self-driving vehicle refers to a vehicle that travels without an operation of a user or with a minimum operation of a user.

For example, the self-driving may include a technology for maintaining a lane while driving, a technology for automatically adjusting a speed, such as adaptive cruise control, a technique for automatically traveling along a predetermined route, and a technology for automatically setting and traveling a route when a destination is set.

The vehicle may include a vehicle having only an internal combustion engine, a hybrid vehicle having an internal combustion engine and an electric motor together, and an electric vehicle having only an electric motor, and may include not only an automobile but also a train, a motorcycle, and the like.

Here, the self-driving vehicle may be regarded as a robot having a self-driving function.

### <eXtended Reality (XR)>

Extended reality is collectively referred to as virtual reality (VR), augmented reality (AR), and mixed reality (MR). The VR technology provides a real-world object and background only as a CG image, the AR technology provides a virtual CG image on a real object image, and the MR technology is a computer graphic technology that mixes and combines virtual objects into the real world.

The MR technology is similar to the AR technology in that the real object and the virtual object are shown together. However, in the AR technology, the virtual object is used in the form that complements the real object, whereas in the MR technology, the virtual object and the real object are used in an equal manner.

The XR technology may be applied to a head-mount display (HMD), a head-up display (HUD), a mobile phone, a tablet PC, a laptop, a desktop, a TV, a digital signage, and the like. A device to which the XR technology is applied may be referred to as an XR device.

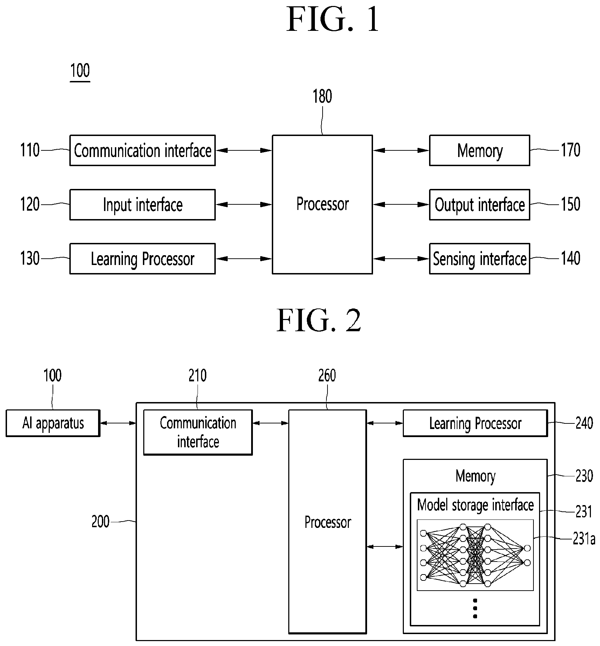

Fig. 1 is a block diagram illustrating an AI device 100 according to an embodiment of the present invention.

Hereinafter, the AI device 100 may be referred to as a terminal 100.

The AI device (or an AI device) 100 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to Fig. 1, the AI device 100 may include a communication unit 110, an input unit 120, a learning processor 130, a sensing unit 140, an output unit 150, a memory 170, and a processor 180.

The communication unit 110 may transmit and receive data to and from external devices such as other 100a to 100e and the AI server 200 by using wire/wireless communication technology. For example, the communication unit 110 may transmit and receive sensor information, a user input, a learning model, and a control signal to and from external devices.

The communication technology used by the communication unit 110 includes GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input unit 120 may acquire various kinds of data.

Here, the input unit 120 may include a camera for inputting a video signal, a microphone for receiving an audio signal, and a user input unit for receiving information from a user. The camera or the microphone may be treated as a sensor, and the signal acquired from the camera or the microphone may be referred to as sensing data or sensor information.

The input unit 120 may acquire a training data for model learning and an input data to be used when an output is acquired by using learning model. The input unit 120 may acquire raw input data. In this case, the processor 180 or the learning processor 130 may extract an input feature by preprocessing the input data.

The learning processor 130 may learn a model composed of an artificial neural network by using training data. The learned artificial neural network may be referred to as a learning model. The learning model may be used to an infer result value for new input data rather than training data, and the inferred value may be used as a basis for determination to perform a certain operation.

Here, the learning processor 130 may perform AI processing together with the learning processor 240 of the AI server 200.

Here, the learning processor 130 may include a memory integrated or implemented in the AI device 100. Alternatively, the learning processor 130 may be implemented by using the memory 170, an external memory directly connected to the AI device 100, or a memory held in an external device.

The sensing unit 140 may acquire at least one of internal information about the AI device 100, ambient environment information about the AI device 100, and user information by using various sensors.

Examples of the sensors included in the sensing unit 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output unit 150 may generate an output related to a visual sense, an auditory sense, or a haptic sense.

Here, the output unit 150 may include a display unit for outputting time information, a speaker for outputting auditory information, and a haptic module for outputting haptic information.

The memory 170 may store data that supports various functions of the AI device 100. For example, the memory 170 may store input data acquired by the input unit 120, training data, a learning model, a learning history, and the like.

The processor 180 may determine at least one executable operation of the AI device 100 based on information determined or generated by using a data analysis algorithm or a machine learning algorithm. The processor 180 may control the components of the AI device 100 to execute the determined operation.
To this end, the processor 180 may request, search, receive, or utilize data of the learning processor 130 or the memory 170. The processor 180 may control the components of the AI device 100 to execute the predicted operation or the operation determined to be desirable among the at least one executable operation.

When the connection of an external device is required to perform the determined operation, the processor 180 may generate a control signal for controlling the external device and may transmit the generated control signal to the external device.

The processor 180 may acquire intention information for the user input and may determine the user's requirements based on the acquired intention information.

The processor 180 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 130, may be learned by the learning processor 240 of the AI server 200, or may be learned by their distributed processing.

The processor 180 may collect history information including the operation contents of the AI device 100 or the user's feedback on the operation and may store the collected history information in the memory 170 or the learning processor 130 or transmit the collected history information to the external device such as the AI server 200. The collected history information may be used to update the learning model.

The processor 180 may control at least part of the components of AI device 100 so as to drive an application program stored in memory 170. Furthermore, the processor 180 may operate two or more of the components included in the AI device 100 in combination so as to drive the application program.

Fig. 2 is a block diagram illustrating an AI server 200 according to an embodiment of the present invention.

Referring to Fig. 2, the AI server 200 may refer to a device that learns an artificial neural network by using a machine learning algorithm or uses a learned artificial neural network. The AI server 200 may include a plurality of servers to perform distributed processing, or may be defined as a 5G network. Here, the AI server 200 may be included as a partial configuration of the AI device 100, and may perform at least part of the AI processing together.

The AI server 200 may include a communication unit 210, a memory 230, a learning processor 240, a processor 260, and the like.

The communication unit 210 can transmit and receive data to and from an external device such as the AI device 100.

The memory 230 may include a model storage unit 231. The model storage unit 231 may store a learning or learned model (or an artificial neural network 231a) through the learning processor 240.

The learning processor 240 may learn the artificial neural network 231a by using the training data. The learning model may be used in a state of being mounted on the AI server 200 of the artificial neural network, or may be used in a state of being mounted on an external device such as the AI device 100.

The learning model may be implemented in hardware, software, or a combination of hardware and software. If all or part of the learning models are implemented in software, one or more instructions that constitute the learning model may be stored in memory 230.

The processor 260 may infer the result value for new input data by using the learning model and may generate a response or a control command based on the inferred result value.

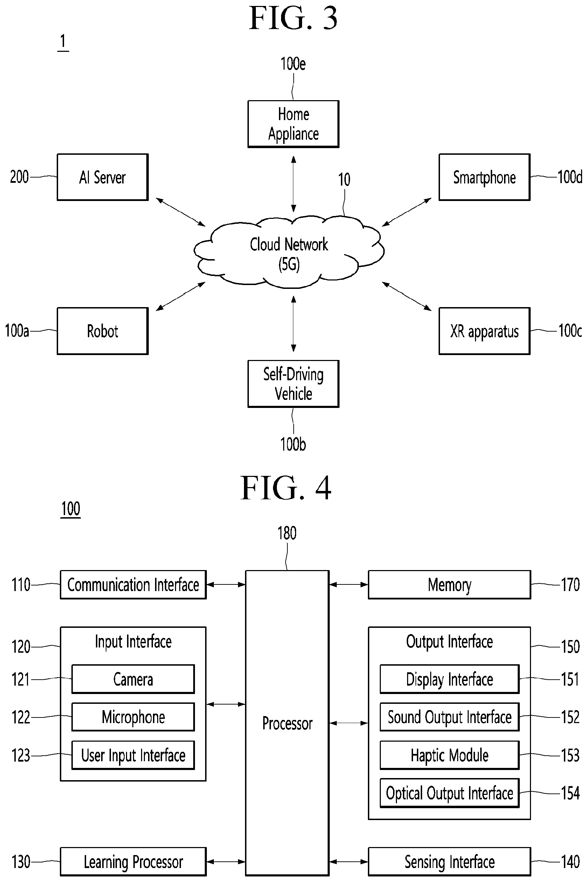

Fig. 3 is a view illustrating an AI system 1 according to an embodiment of the present invention.

Referring to Fig. 3, in the AI system 1, at least one of an AI server 200, a robot 100a, a self-driving vehicle 100b, an XR device 100c, a smartphone 100d, or a home appliance 100e is connected to a cloud network 10. The robot 100a, the self-driving vehicle 100b, the XR device 100c, the smartphone 100d, or the home appliance 100e, to which the AI technology is applied, may be referred to as AI devicees 100a to 100e.

The cloud network 10 may refer to a network that forms part of a cloud computing infrastructure or exists in a cloud computing infrastructure. The cloud network 10 may be configured by using a 3G network, a 4G or LTE network, or a 5G network.

That is, the devices 100a to 100e and 200 configuring the AI system 1 may be connected to each other through the cloud network 10. In particular, each of the devices 100a to 100e and 200 may communicate with each other through a base station, but may directly communicate with each other without using a base station.

The AI server 200 may include a server that performs AI processing and a server that performs operations on big data.

The AI server 200 may be connected to at least one of the AI devicees constituting the AI system 1, that is, the robot 100a, the self-driving vehicle 100b, the XR device 100c, the smartphone 100d, or the home appliance 100e through the cloud network 10, and may assist at least part of AI processing of the connected AI devicees 100a to 100e.

Here, the AI server 200 may learn the artificial neural network according to the machine learning algorithm instead of the AI devicees 100a to 100e, and may directly store the learning model or transmit the learning model to the AI devicees 100a to 100e.

Here, the AI server 200 may receive input data from the AI devicees 100a to 100e, may infer the result value for the received input data by using the learning model, may generate a response or a control command based on the inferred result value, and may transmit the response or the control command to the AI devicees 100a to 100e.

Alternatively, the AI devicees 100a to 100e may infer the result value for the input data by directly using the learning model, and may generate the response or the control command based on the inference result.

Hereinafter, various embodiments of the AI devicees 100a to 100e to which the above-described technology is applied will be described. The AI devicees 100a to 100e illustrated in Fig. 3 may be regarded as a specific embodiment of the AI device 100 illustrated in Fig. 1.

### <AI + Robot>

The robot 100a, to which the AI technology is applied, may be implemented as a guide robot, a carrying robot, a cleaning robot, a wearable robot, an entertainment robot, a pet robot, an unmanned flying robot, or the like.

The robot 100a may include a robot control module for controlling the operation, and the robot control module may refer to a software module or a chip implementing the software module by hardware.

The robot 100a may acquire state information about the robot 100a by using sensor information acquired from various kinds of sensors, may detect (recognize) surrounding environment and objects, may generate map data, may determine the route and the travel plan, may determine the response to user interaction, or may determine the operation.

The robot 100a may use the sensor information acquired from at least one sensor among the lidar, the radar, and the camera so as to determine the travel route and the travel plan.

The robot 100a may perform the above-described operations by using the learning model composed of at least one artificial neural network. For example, the robot 100a may recognize the surrounding environment and the objects by using the learning model, and may determine the operation by using the recognized surrounding information or object information. The learning model may be learned directly from the robot 100a or may be learned from an external device such as the AI server 200.

Here, the robot 100a may perform the operation by generating the result by directly using the learning model, but the sensor information may be transmitted to the external device such as the AI server 200 and the generated result may be received to perform the operation.

The robot 100a may use at least one of the map data, the object information detected from the sensor information, or the object information acquired from the external apparatus to determine the travel route and the travel plan, and may control the driving unit such that the robot 100a travels along the determined travel route and travel plan.

The map data may include object identification information about various objects arranged in the space in which the robot 100a moves. For example, the map data may include object identification information about fixed objects such as walls and doors and movable objects such as pollen and desks. The object identification information may include a name, a type, a distance, and a position.

In addition, the robot 100a may perform the operation or travel by controlling the driving unit based on the control/interaction of the user. Here, the robot 100a may acquire the intention information of the interaction due to the user's operation or speech utterance, and may determine the response based on the acquired intention information, and may perform the operation.

### <AI + Self-Driving>

The self-driving vehicle 100b, to which the AI technology is applied, may be implemented as a mobile robot, a vehicle, an unmanned flying vehicle, or the like.

The self-driving vehicle 100b may include a self-driving control module for controlling a self-driving function, and the self-driving control module may refer to a software module or a chip implementing the software module by hardware. The self-driving control module may be included in the self-driving vehicle 100b as a component thereof, but may be implemented with separate hardware and connected to the outside of the self-driving vehicle 100b.

The self-driving vehicle 100b may acquire state information about the self-driving vehicle 100b by using sensor information acquired from various kinds of sensors, may detect (recognize) surrounding environment and objects, may generate map data, may determine the route and the travel plan, or may determine the operation.

Like the robot 100a, the self-driving vehicle 100b may use the sensor information acquired from at least one sensor among the lidar, the radar, and the camera so as to determine the travel route and the travel plan.

In particular, the self-driving vehicle 100b may recognize the environment or objects for an area covered by a field of view or an area over a certain distance by receiving the sensor information from external devices, or may receive directly recognized information from the external devices.

The self-driving vehicle 100b may perform the above-described operations by using the learning model composed of at least one artificial neural network. For example, the self-driving vehicle 100b may recognize the surrounding environment and the objects by using the learning model, and may determine the traveling movement line by using the recognized surrounding information or object information. The learning model may be learned directly from the self-driving vehicle 100a or may be learned from an external device such as the AI server 200.

Here, the self-driving vehicle 100b may perform the operation by generating the result by directly using the learning model, but the sensor information may be transmitted to the external device such as the AI server 200 and the generated result may be received to perform the operation.

The self-driving vehicle 100b may use at least one of the map data, the object information detected from the sensor information, or the object information acquired from the external apparatus to determine the travel route and the travel plan, and may control the driving unit such that the self-driving vehicle 100b travels along the determined travel route and travel plan.

The map data may include object identification information about various objects arranged in the space (for example, road) in which the self-driving vehicle 100b travels. For example, the map data may include object identification information about fixed objects such as street lamps, rocks, and buildings and movable objects such as vehicles and pedestrians. The object identification information may include a name, a type, a distance, and a position.

In addition, the self-driving vehicle 100b may perform the operation or travel by controlling the driving unit based on the control/interaction of the user. Here, the self-driving vehicle 100b may acquire the intention information of the interaction due to the user's operation or speech utterance, and may determine the response based on the acquired intention information, and may perform the operation.

### <AI + XR>

The XR device 100c, to which the AI technology is applied, may be implemented by a head-mount display (HMD), a head-up display (HUD) provided in the vehicle, a television, a mobile phone, a smartphone, a computer, a wearable device, a home appliance, a digital signage, a vehicle, a fixed robot, a mobile robot, or the like.

The XR device 100c may analyzes three-dimensional point cloud data or image data acquired from various sensors or the external devices, generate position data and attribute data for the three-dimensional points, acquire information about the surrounding space or the real object, and render to output the XR object to be output. For example, the XR device 100c may output an XR object including the additional information about the recognized object in correspondence to the recognized object.

The XR device 100c may perform the above-described operations by using the learning model composed of at least one artificial neural network. For example, the XR device 100c may recognize the real object from the three-dimensional point cloud data or the image data by using the learning model, and may provide information corresponding to the recognized real object. The learning model may be directly learned from the XR device 100c, or may be learned from the external device such as the AI server 200.

Here, the XR device 100c may perform the operation by generating the result by directly using the learning model, but the sensor information may be transmitted to the external device such as the AI server 200 and the generated result may be received to perform the operation.

### <AI + Robot + Self-Driving>

The robot 100a, to which the AI technology and the self-driving technology are applied, may be implemented as a guide robot, a carrying robot, a cleaning robot, a wearable robot, an entertainment robot, a pet robot, an unmanned flying robot, or the like.

The robot 100a, to which the AI technology and the self-driving technology are applied, may refer to the robot itself having the self-driving function or the robot 100a interacting with the self-driving vehicle 100b.

The robot 100a having the self-driving function may collectively refer to a device that moves for itself along the given movement line without the user's control or moves for itself by determining the movement line by itself.

The robot 100a and the self-driving vehicle 100b having the self-driving function may use a common sensing method so as to determine at least one of the travel route or the travel plan. For example, the robot 100a and the self-driving vehicle 100b having the self-driving function may determine at least one of the travel route or the travel plan by using the information sensed through the lidar, the radar, and the camera.

The robot 100a that interacts with the self-driving vehicle 100b exists separately from the self-driving vehicle 100b and may perform operations interworking with the self-driving function of the self-driving vehicle 100b or interworking with the user who rides on the self-driving vehicle 100b.

Here, the robot 100a interacting with the self-driving vehicle 100b may control or assist the self-driving function of the self-driving vehicle 100b by acquiring sensor information on behalf of the self-driving vehicle 100b and providing the sensor information to the self-driving vehicle 100b, or by acquiring sensor information, generating environment information or object information, and providing the information to the self-driving vehicle 100b.

Alternatively, the robot 100a interacting with the self-driving vehicle 100b may monitor the user boarding the self-driving vehicle 100b, or may control the function of the self-driving vehicle 100b through the interaction with the user. For example, when it is determined that the driver is in a drowsy state, the robot 100a may activate the self-driving function of the self-driving vehicle 100b or assist the control of the driving unit of the self-driving vehicle 100b. The function of the self-driving vehicle 100b controlled by the robot 100a may include not only the self-driving function but also the function provided by the navigation system or the audio system provided in the self-driving vehicle 100b.

Alternatively, the robot 100a that interacts with the self-driving vehicle 100b may provide information or assist the function to the self-driving vehicle 100b outside the self-driving vehicle 100b. For example, the robot 100a may provide traffic information including signal information and the like, such as a smart signal, to the self-driving vehicle 100b, and automatically connect an electric charger to a charging port by interacting with the self-driving vehicle 100b like an automatic electric charger of an electric vehicle.

### <AI + Robot + XR>

The robot 100a, to which the AI technology and the XR technology are applied, may be implemented as a guide robot, a carrying robot, a cleaning robot, a wearable robot, an entertainment robot, a pet robot, an unmanned flying robot, a drone, or the like.

The robot 100a, to which the XR technology is applied, may refer to a robot that is subjected to control/interaction in an XR image. In this case, the robot 100a may be separated from the XR device 100c and interwork with each other.

When the robot 100a, which is subjected to control/interaction in the XR image, may acquire the sensor information from the sensors including the camera, the robot 100a or the XR device 100c may generate the XR image based on the sensor information, and the XR device 100c may output the generated XR image. The robot 100a may operate based on the control signal input through the XR device 100c or the user's interaction.

For example, the user can confirm the XR image corresponding to the time point of the robot 100a interworking remotely through the external device such as the XR device 100c, adjust the self-driving travel path of the robot 100a through interaction, control the operation or driving, or confirm the information about the surrounding object.

### <AI + Self-Driving + XR>

The self-driving vehicle 100b, to which the AI technology and the XR technology are applied, may be implemented as a mobile robot, a vehicle, an unmanned flying vehicle, or the like.

The self-driving driving vehicle 100b, to which the XR technology is applied, may refer to a self-driving vehicle having a means for providing an XR image or a self-driving vehicle that is subjected to control/interaction in an XR image. Particularly, the self-driving vehicle 100b that is subjected to control/interaction in the XR image may be distinguished from the XR device 100c and interwork with each other.

The self-driving vehicle 100b having the means for providing the XR image may acquire the sensor information from the sensors including the camera and output the generated XR image based on the acquired sensor information. For example, the self-driving vehicle 100b may include an HUD to output an XR image, thereby providing a passenger with a real object or an XR object corresponding to an object in the screen.

Here, when the XR object is output to the HUD, at least part of the XR object may be outputted so as to overlap the actual object to which the passenger's gaze is directed. Meanwhile, when the XR object is output to the display provided in the self-driving vehicle 100b, at least part of the XR object may be output so as to overlap the object in the screen. For example, the self-driving vehicle 100b may output XR objects corresponding to objects such as a lane, another vehicle, a traffic light, a traffic sign, a two-wheeled vehicle, a pedestrian, a building, and the like.

When the self-driving vehicle 100b, which is subjected to control/interaction in the XR image, may acquire the sensor information from the sensors including the camera, the self-driving vehicle 100b or the XR device 100c may generate the XR image based on the sensor information, and the XR device 100c may output the generated XR image. The self-driving vehicle 100b may operate based on the control signal input through the external device such as the XR device 100c or the user's interaction.

FIG. 4 is a block diagram illustrating an AI device 100 according to an embodiment of the present invention.

The redundant repeat of FIG. 1 will be omitted below.

The communication unit 110 may also be referred to as a communication modem or a communication circuit.

Referring to Fig. 4, the input unit 120 may include a camera 121 for image signal input, a microphone 122 for receiving audio signal input, and a user input unit 123 for receiving information from a user.

Voice data or image data collected by the input unit 120 are analyzed and processed as a user's control command.

Then, the input unit 120 is used for inputting image information (or signal), audio information (or signal), data, or information inputted from a user and the AI device 100 may include at least one camera 121 in order for inputting image information.

The camera 121 processes image frames such as a still image or a video obtained by an image sensor in a video call mode or a capturing mode. The processed image frame may be displayed on the display unit 151 or stored in the memory 170.

The microphone 122 processes external sound signals as electrical voice data. The processed voice data may be utilized variously according to a function (or an application program being executed) being performed in the AI device 100. Moreover, various noise canceling algorithms for removing noise occurring during the reception of external sound signals may be implemented in the microphone 122.

The user input unit 123 is to receive information from a user and when information is inputted through the user input unit 123, the processor 180 may control an operation of the AI device 100 to correspond to the inputted information.

The user input unit 123 may include a mechanical input means (or a mechanical key, for example, a button, a dome switch, a jog wheel, and a jog switch at the front, back or side of the AI device 100) and a touch type input means. As one example, a touch type input means may include a virtual key, a soft key, or a visual key, which is displayed on a touch screen through software processing or may include a touch key disposed at a portion other than the touch screen.

The sensing unit 140 may be referred to as a sensor unit.

The output unit 150 may include at least one of a display unit 151, a sound output module 152, a haptic module 153, or an optical output module 154.

The display unit 151 may display (output) information processed in the AI device 100. For example, the display unit 151 may display execution screen information of an application program running on the AI device 100 or user interface (UI) and graphic user interface (GUI) information according to such execution screen information.

The display unit 151 may be formed with a mutual layer structure with a touch sensor or formed integrally, so that a touch screen may be implemented. Such a touch screen may serve as the user input unit 123 providing an input interface between the AI device 100 and a user, and an output interface between the AI device 100 and a user at the same time.

The sound output module 152 may output audio data received from the wireless communication unit 110 or stored in the memory 170 in a call signal reception or call mode, a recording mode, a voice recognition mode, or a broadcast reception mode.

The sound output module 152 may include a receiver, a speaker, and a buzzer.

The haptic module 153 generates various haptic effects that a user can feel. A representative example of a haptic effect that the haptic module 153 generates is vibration.

The optical output module 154 outputs a signal for notifying event occurrence by using light of a light source of the AI device 100. An example of an event occurring in the AI device 100 includes message reception, call signal reception, missed calls, alarm, schedule notification, e-mail reception, and information reception through an application.

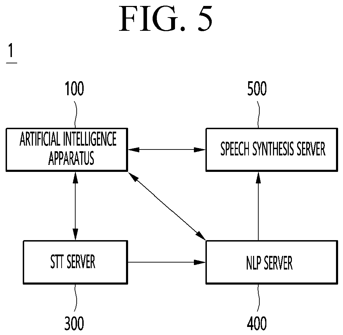

FIG. 5 is a block diagram illustrating an artificial intelligence system 1 according to an embodiment of the present disclosure.

Referring to FIG. 5, the artificial intelligence system 1 may include an AI device 100, a speech to text (STT, Speech To Text) server 300, a natural language processing (NLP) server 400 and a speech synthesis server 500.

The AI device 100 may transmit speech data to the STT server 300. The STT server 300 may convert the speech data received from the AI device 100 into text data. The NLP server 400 may receive text data from the STT server 300. The NLP server 400 may perform intention analysis on the text data based on the received text data. The NLP server 400 may transmit intention analysis information indicating a result of performing the intention analysis to the AI device 100 or the speech synthesis server 500. The speech synthesis server 500 may generate a synthesized speech reflecting a user's intention based on the intention analysis information, and transmit the generated synthesized speech to the AI device 100.

The STT server 300 may increase the accuracy of speech-text conversion by using a language model. The language model may refer to a model capable of calculating the probability of a sentence or calculating probability that the next word will appear when previous words are given. For example, the language model may include probabilistic language models such as a Unigram model, a Bigram model, an N-gram model, and the like. The unigram model is a model assuming that the uses of all words are completely independent of each other, and a model that calculates the probability of a string of words as the product of the probabilities of the words. The bigram model is a model assuming that the use of a word depends only on one previous word. The N-gram model is a model assuming that the probability of a word depends on the previous (n-1) words.

That is, the STT server 300 may determine whether the text data converted from speech data is properly converted by using the language model, thereby increasing the accuracy of the conversion from the speech data to the text data.

The NLP server 400 may generate the intention analysis information by sequentially performing a morpheme analysis operation, a syntax analysis operation, a dialogue act analysis operation, and a dialogue processing operation on the text data.

The morpheme analysis operation is an operation of classifying text data corresponding to speech uttered by the user into morpheme units, which are the smallest units having meaning, and determining which part of speech each classified morpheme has. The syntax analysis operation is an operation of classifying the text data into a noun phrase, a verb phrase, an adjective phrase, or the like using a result of the morpheme analysis operation, and determining a relation between the phrases. Through the syntax analysis operation, the subject, object, and modifiers of the speech spoken by the user may be determined. The dialogue act analysis operation is an operation of analyzing the intention of the speech uttered by the user using the result of the syntax analysis operation. Specifically, the dialogue act analysis operation is an operation of determining the intention of the sentence, such as whether the user asks a question, makes a request, or expresses a simple emotion. The dialog processing operation is an operation for determining whether to answer the user's utterance, respond to the utterance, or ask a question inquiring additional information, using a result of the speech act analysis operation.

After the dialog processing operation, the NLP server 400 may generate intention analysis information including one or more of an answer to the intention uttered by the user, and a response to the intention and an additional information inquiry.

Meanwhile, the NLP server 400 may receive text data from the AI device 100. For example, when the AI device 100 supports a speech-to-text conversion function, the AI device 100 may convert speech data into text data and transmit the converted text data to the NLP server 400.

The speech synthesis server 500 may generate a synthesized speech by combining pieces of pre-stored speech data. The speech synthesis server 500 may record the speech of a person selected as a model, and divide the recorded speech into syllables or words. The speech synthesis server 500 may store the speech divided in units of syllables or words in an internal or external database.

The speech synthesis server 500 may search for syllables or words corresponding to given text data from the database and synthesize a combination of the syllables or the words searched to generate a synthesized speech.

The speech synthesis server 500 may store a plurality of speech language groups respectively corresponding to a plurality of languages. For example, the speech synthesis server 500 may include a first speech language group recorded in Korean, and a second speech language group recorded in English.

The speech synthesis server 500 may translate text data of a first language into text of a second language, and generate a synthesized speech corresponding to the translated text of the second language by using a second speech language group.

The artificial intelligence system 1 may further include an AI server 200. The AI server 200 may allow at least one of an STT engine used in the STT server 300, an NLP engine used in the NLP server 400, and a speech synthesis engine used in the speech synthesis server 500 to be learned. That is, at least one of the STT server 300, the NLP server 400, and the speech synthesis server 500 may use models or engines trained in the AI server 200.

In FIG. 5, the AI device 100, the STT server 300, the NLP server 400, and the speech synthesis server 500 are illustrated as being separate from each other, but the present disclosure is not limited thereto. In an embodiment, some of the AI server 200, the STT server 300, the NLP server 400, or the speech synthesis server 500 may be configured as one server. In an embodiment, some of the STT server 300, the NLP server 400 or the speech synthesis server 500 may be included in the AI device 100, which implies that the AI device 100 performs functions of the STT server 300, the NLP server 400 or the speech synthesis server 500.

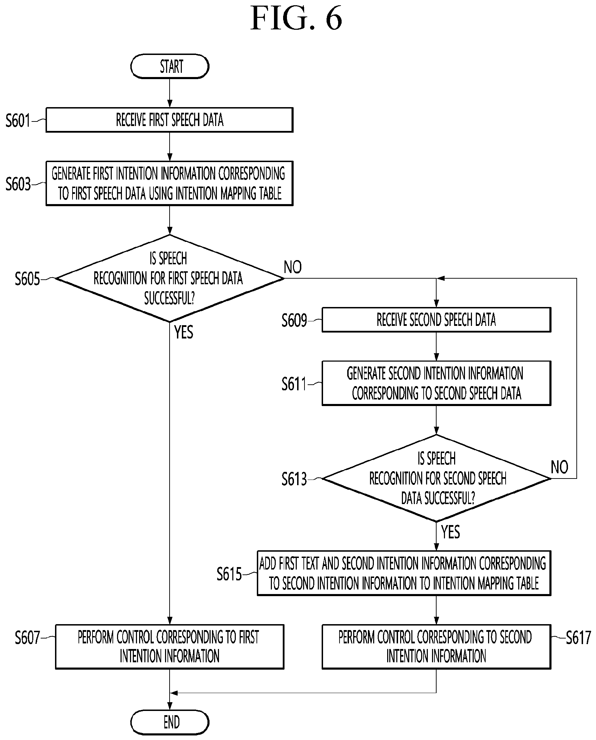

FIG. 6 is an operational flowchart illustrating a method of recognizing speech according to an embodiment of the present disclosure.

Referring to FIG. 6, a processor 180 of the AI device 100 may receive first speech data including a user's speech (S601).

The processor 180 may receive the first speech data through the microphone 122, or may receive the first speech data from an external device (not shown) through the communication unit 110.

The first speech data is obtained by converting sound waves including the user's speech into a digital signal. For example, the first speech data may be an audio file of various formats, such as pulse code modulation (PCM), wav, or mp3.

The user's speech may mean an uttered speech including a command for controlling the AI device 100, a query for information search, and the like.

The processor 180 may remove noise from the first speech data obtained through pre-processing. The processor 180 may directly generate noise-removed speech data using a noise-removing engine or a noise-removing filter, or transmit sound data to the AI server 200 and receive the noise-removed speech data. Also, the volume of the speech data may be adjusted according to a predetermined level. Adjusting the volume of speech data may also be considered as a part of the pre-processing. Hereinafter, the first speech data may mean the first speech data from which noise has been removed through preprocessing.

Then, the processor 180 of the AI device 100 may generate first intention information corresponding to the first speech data using an intention mapping table and a Natural Learning Processing (NLP) engine (S603).

The first intention information may mean intention information corresponding to the first speech data. The intention information for the speech data may refer to semantic information or intention information corresponding to text converted from speech included in the speech data.

The processor 180 may convert the first speech data into a first text using a speech-to-text (STT) engine, and may generate first intention information corresponding to the converted first text using the intention mapping table and the NLP engine. Detailed description thereof will be described later.

The intention mapping table may include mapping information (or mapping information) between text and intention information corresponding to the text, and may be stored in the memory 170 or the memory 230 of the AI server 200. Also, the intention mapping table may further include information on a recommended application.

When converting the first speech data into the first text, the processor 180 may calculate a probability for each word corresponding to each section of the first speech data, convert the first speech data into the first text based on the calculated probability, and generate the first intention information based on the converted first text. In particular, the processor 180 may convert the first speech data into the first text by combining words having the highest probability.

Alternatively, the processor 180 may generate a first speech recognition result corresponding to the first speech data using the AI server 200, the STT server 300, or the NLP server 400. For example, the processor 180 may transmit the first speech data to the STT server 300 through the communication unit 110, the STT server 300 may convert the received first speech data into text and transmit the converted text to the NLP server 400, and the NLP server 400 may generate first intention information corresponding to the received text, and transmit the generated first intention information to the AI device 100. The NLP server 400 or the processor 180 may refer to the intention mapping table when generating intention information.

When a mapping item corresponding to the first text converted from the first speech data is included in the intention information table, the processor 180 may determine the first intention information corresponding to the first text as the intention information of the corresponding mapping item.

Then, the processor 180 of the AI device 100 may determine whether the speech recognition for the first speech data has succeeded (S605).

When the processor 180 fails to generate the first intention information from the first speech data, or when the reliability or accuracy of the generated first intention information is lower than a predetermined reference value (or the first reference reliability value), the processor 180 may determine that speech recognition has failed.

When the speech recognition for the first speech data has succeeded as a result of the determination in step S605, the processor 180 of the AI device 100 may perform control corresponding to the first intention information (S607).

When the first intention information is a control command for controlling the AI device 100 or an external device (not shown), the processor 180 may perform the control corresponding to the control command. In particular, when the control command is a command for controlling an external device (not shown), the processor 180 may generate a control signal for controlling the external device (not shown) according to the control command, and transmit the generated control signal to the external device (not shown) through the communication unit 110. In addition, the processor 180 may transmit a feedback for the control command to the user through the output unit 150 or transmit, to a user terminal (not shown), an output signal for outputting the feedback for the control command through the communication unit 110.

Similarly, when the first intention information is a query requesting information, the processor 180 may generate response information corresponding to the query through the Internet or the like. In addition, the processor 180 may output the generated response information through the output unit 150 or transmit, to a user terminal (not shown), an output signal for outputting the response information through the communication unit 110.

The processor 180 may generate a response speech for outputting the response information, and output the response speech with a speech through the sound output module 152. Specifically, the processor 180 may generate a response sentence using a natural language generation (NLG) technique, convert the generated response sentence into a response speech using a text to speech (TTS) engine, and output the converted response speech through the sound output module 152.

Furthermore, the processor 180 may determine a recommended application corresponding to the first intention information and suggest execution of the determined recommended application. The recommended application may mean an application determined to be highly correlated with the first intention information.

When the correlation between one or more keywords set for each application and the first intention information is equal to or greater than a predetermined reference value, the processor 180 may determine the corresponding application as a recommended application. Alternatively, the processor 180 may determine a recommended application corresponding to the first intention information by referring to mapping items included in the intention information table.

The processor 180 may determine whether the suggested execution of the recommended application is performed and, when the suggested execution of the recommended application has been performed, evaluate the reliability of speech recognition for the first speech data further highly. That is, whether a recommended application is executed may be regarded as a criterion for determining whether speech recognition has succeeded, which assists in determining whether speech recognition for the first speech data has succeeded in step S605. In addition, whether a recommended application is executed may serve as feedback on whether the speech recognition for the first speech data has succeeded.

In an embodiment, when the processor 180 has suggested a recommended application corresponding to the first intention information, but the suggested recommended application is not executed, the the processor 180 may determine that speech recognition for the first speech data has failed despite the result of the determination in step S605. When the speech recognition for the first speech data has failed as a result of the determination in step S605, the processor 180 of the AI device 100 may receive second speech data (S609).

The second speech data may refer to speech data received within a predetermined time period after the first speech data has been received or speech recognition for the first speech data has failed. For example, the second speech data may refer to speech data that is re-received within 5 seconds after the first speech data has been received. That is, the second speech data may refer to speech data corresponding to speech re-uttered by a user in response to the first speech data because speech recognition for the first speech data has failed.

A method of acquiring the second speech data or a format of the second speech data may be identical to a method of acquiring the first speech data or a format of the first speech data.

Then, the processor 180 of the AI device 100 may generate second intention information corresponding to the second speech data (S611).

The second intention information may mean intention information corresponding to the second speech data.

The processor 180 may convert the second speech data into text using the STT engine and generate second intention information corresponding to the converted text using at least one of the intention mapping table and the NLP engine.

Alternatively, the processor 180 may generate second intention information corresponding to the converted text using at least one or more of the intention mapping table stored in the memory 170 or the memory 230 of the AI server 200 and the NLP engine.

Alternatively, the processor 180 may generate the second intention information corresponding to the second speech data using the AI server 200 or the STT server 300, and the NLP server 400.

Then, the processor 180 of the AI device 100 may determine whether the speech recognition for the second speech data has succeeded (S613).

When the processor 180 fails to generate the second intention information from the second speech data, or when the reliability or accuracy of the generated second intention information is lower than a predetermined reference value (or the second reference reliability value), the processor 180 may determine that speech recognition has failed.

When the speech recognition for the second speech data has failed as a result of the determination in step S613, the processor 180 of the AI device 100 may return to step S609 of receiving the second speech data.

When the speech recognition for the second speech data has succeeded as a result of the determination in step S613, the processor 180 of the AI device 100 may perform control corresponding to the second intention information (S615).

When the second intention information is a control command for controlling the AI device 100 or an external device (not shown), the processor 180 may perform the control corresponding to the control command.

Similarly, when the second intention information is a query requesting information, the processor 180 may generate response information corresponding to the query through the Internet or the like. In addition, the processor 180 may output the generated response information through the output unit 150 or transmit, to a user terminal (not shown), an output signal for outputting the response information through the communication unit 110.

Furthermore, the processor 180 may determine a recommended application corresponding to the second intention information and suggest execution of the determined recommended application. For example, when the determined recommended application is a weather application, the processor 180 may suggest execution of the weather application.

When the correlation between one or more keywords set for each application and the second intention information is equal to or greater than a predetermined reference value, the processor 180 may determine the corresponding application as a recommended application. Alternatively, the processor 180 may determine a recommended application corresponding to the second intention information by referring to mapping items included in the intention information table.

The processor 180 may determine whether the suggested execution of the recommended application is performed and, when the suggested execution of the recommended application has been performed, evaluate the reliability of speech recognition for the second speech data to be further high. That is, whether the recommended application is executed may be regarded as a criterion for determining whether speech recognition has succeeded, which assists in determining whether speech recognition for the second speech data has succeeded in step S613. In addition, whether the recommendation application is executed may serve as feedback on whether or not the speech recognition for the second speech data has succeeded.

In an embodiment, when the processor 180 has suggested a recommended application corresponding to the second intention information, but the suggested recommended application is not executed, the processor 180 may determine that speech recognition for the second speech data has failed despite the result of the determination in step S613.

Then, the processor 180 of the AI device 100 may map the first text converted from the first speech data and the second intention information and add mapping information to the intention mapping table (S617).

Since the second speech data is speech data re-uttered by the user in a situation where the speech recognition for the first speech data has failed, it can be considered that the first intention information intended by the user is the second intention information when the speech recognition for the second speech data has succeeded. Accordingly, the processor 180 may add a mapping item that maps the first text corresponding to the first speech data to the second intention information to the intention mapping table.

The intention mapping table may further include a counter corresponding to each mapping item. When the intention mapping table includes the mapping item of the same text and intention information, the counter value of the corresponding mapping item may be increased instead of adding a duplicate mapping item to the intention mapping table.

However, when the second intention information is generated based on a mapping item included in the intention mapping table, the corresponding mapping item is re-generated and added to the intention mapping table, which may cause a problem in which a strong positive feedback occurs. Accordingly, in an embodiment, when the second intention information is generated based on a mapping item included in the intention mapping table, the processor 180 may not add the mapping item that maps the corresponding second intention information to the intention mapping table. In other words, the processor 180 may add the mapping item that maps the second intention information to the intention mapping table only when the second intention information is generated through the NLP engine.

When it is determined that the recommended application corresponding to the second intention information is executed, the processor 180 may add a mapping item that maps first text, second intention information, and a recommended application to the intention mapping table. Similarly, when the same mapping item is included in the intention mapping table, the processor 180 may increase the counter value of the corresponding mapping item existing in the intention mapping table by 1.

The order of the steps shown in FIG. 6 is only an example, and the present disclosure is not limited thereto. That is, according to an embodiment, the order of some of the steps shown in FIG. 6 may be reversed to be performed. In an embodiment, some of the steps shown in FIG. 6 may be performed in parallel. Further, only some of the steps shown in FIG. 6 may be performed.

FIG. 6 illustrates one cycle of a method in which the AI device 100 recognizes a speech, and the present disclosure is not limited thereto. That is, the steps shown in FIG. 6 may be repeatedly performed.

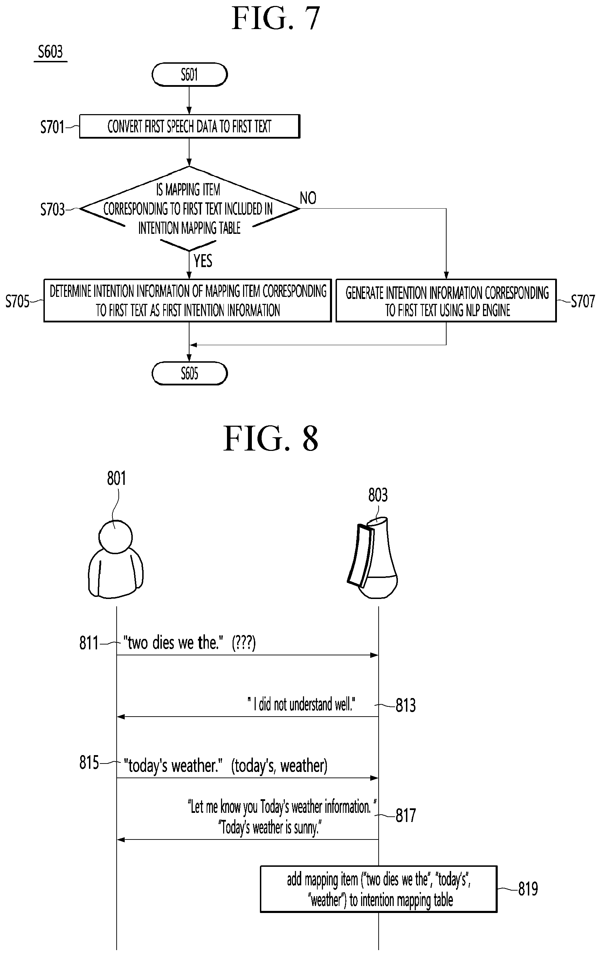

FIG. 7 is an operational flowchart illustrating an example of a step of generating first intention information corresponding to first speech data using the intention mapping table shown in FIG. 6 (S603).

Referring to FIG. 7, the processor 180 of the AI device 100 may convert first speech data into first text (S701).

The processor 180 may directly convert the first speech data into the first text using the STT engine. Alternatively, the processor 180 may transmit the first speech data to the AI server 200 through the communication unit 110, the processor 260 of the AI server 200 may convert the first speech data into first text using the STT engine, and the processor 180 may receive the converted first text from the AI server 220 through the communication unit 110.

Then, the processor 180 of the AI device 100 may determine whether a mapping item corresponding to the first text is included in the intention mapping table (S703).

The intention mapping table may include a mapping item to which text and intention information corresponding thereto are mapped. Also, the intention mapping table may further include a counter for each mapping item.

Alternatively, the processor 180 may determine whether a mapping item corresponding to the first text and having a counter equal to or greater than a predetermined value (or a first reference counter value) is included in the intention mapping table. A counter for a mapping item may indicate how many the corresponding mapping item have been added to the intention mapping table. Therefore, it can be considered that the higher the counter value, the higher the reliability of the corresponding mapping item. For example, the processor 180 may determine whether a mapping item corresponding to the first text and having a counter value of 10 or more is included in the mapping items included in the intention mapping table.

When it is determined in step S703 that the mapping item corresponding to the first text is included in the intention mapping table, the processor 180 of the AI device 100 may determine the first intention information as the intention information of the mapping item corresponding to the first text (S705).

When a mapping item including the same text as the first text exists among the mapping items included in the intention mapping table, the processor 180 may determine the corresponding mapping item as a mapping item corresponding to the first text.

The processor 180 may calculate a similarity with the first text with respect to the text of the mapping items included in the intention mapping table, and when the similarity of the mapping item with the highest similarity exceeds a predetermined reference value, determine that the mapping item corresponding to the first text is included in the intention mapping table, and determine a mapping item having the highest similarity with the first text as a mapping item corresponding to the first text.

When it is determined in step S703 that the mapping item corresponding to the first text is not included in the intention mapping table, the processor 180 of the AI device 100 may generate first intention information corresponding to the first text using the NLP engine (S707).

The processor 180 may calculate a similarity with the first text with respect to the text of the mapping items included in the intention mapping table, and when the similarity of the mapping item with the highest similarity does not exceed the predetermined reference value, determine that the mapping item corresponding to the first text is not included in the intention mapping table.

When the step S611 of generating the second intention information corresponding to the second speech data illustrated in FIG. 6 uses the intention mapping table, the step S611 of generating the second intention information may be performed in the same as or similar manner to the steps (S701 to S707) illustrated in FIG. 7. That is, the processor 180 of the AI device 100 may convert the second speech data into the second text, determine whether a mapping item corresponding to the second text is included in the intention mapping table, and generate the second intention information by using a mapping item corresponding to the second speech data included in the intention mapping table or by using the NLP engine.

The order of the steps shown in FIG. 7 is only an example, and the present disclosure is not limited thereto. That is, according to an embodiment, the order of some of the steps shown in FIG. 7 may be reversed to be performed. In an embodiment, some of the steps shown in FIG. 7 may be performed in parallel. Further, only some of the steps shown in FIG. 7 may be performed.

FIG. 8 is a diagram illustrating an embodiment of the present disclosure.

Referring to FIG. 8, it is assumed that a user 801 utters "today's weather" to ask about today's weather with respect to the AI device 803 but the pronunciation thereof is very similar to "two dies we the" (811). The AI device 803 may convert the speech (first speech data) uttered by the user 801 into text "two dies we the" and fail to generate intention information therefor. In addition, the AI device 803 may provide a response "I did not understand well" (813).

The user 801 may utter "today's weather" 815 with a clearer pronunciation with respect to the AI device 803 within a predetermined time period (e.g., within 5 seconds). The AI device 803 may accurately convert the speech (first speech data) uttered by the user 801 into text "today's weather", and generate "today", "weather" as intention information for the text. Further, the AI device 803 may provide a response "Let me know you Today's weather information. Today's weather is sunny" as today's weather information (817).

The first uttered speech (first speech data) of the user 801 "two dies we the" (811) is corrected to the second uttered speech (second speech data), "today's weather", and therefore, it can be considered that the intention information of the first uttered speech (first speech data) means "today's", "weather", which are the intention information of the uttered speech (second speech data). Accordingly, the AI device 803 may add mapping items ("two dies we the"; "today's", "weather") to the intention mapping table (819).

Thereafter, even when the user 801 utters "two dies we the" with respect to the AI device 803, the AI device 803 may determine "today's" and "weather" as intention information in consideration of the mapping items ("two dies we the"; "today's", "weather") included in the intention mapping table.

In an embodiment, the AI device 803 may subdivide a mapping item into units of words or phrases, and accordingly, add new mapping items ("two dies"; "today's") and ("we the"; "weather") to the intention mapping table.

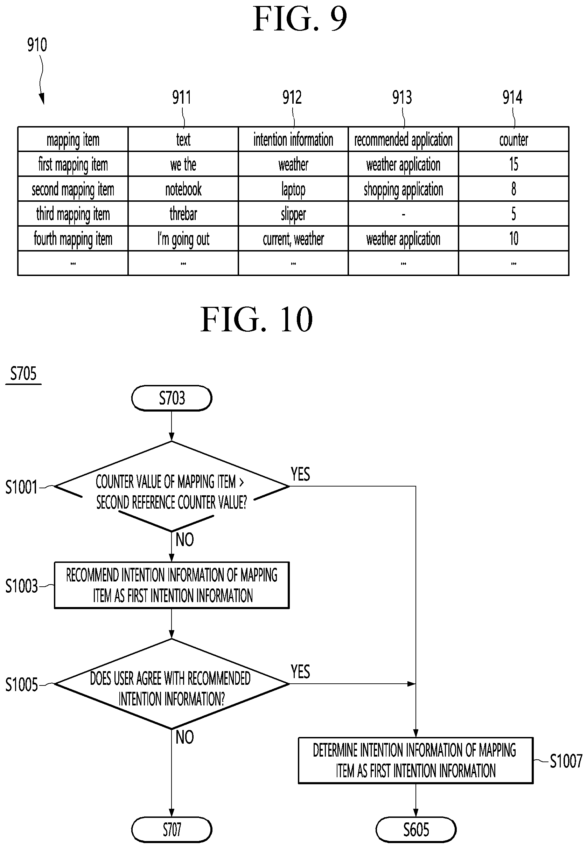

FIG. 9 is a diagram illustrating an example of an intention mapping table according to an embodiment of the present disclosure.

Referring to FIG. 9, an intention mapping table 910 may include text 911 and intention information 912. Furthermore, the intention mapping table 910 may further include a recommended application 913 or a counter 914.

The text 911 and the intention information 912 included in one mapping item may imply that the text 911 and the intention information 912 are mapped to each other, and the intention information of the text 911 included in the mapping item may imply that the intention information is able to be regarded as the intention information 912 mapped in the intention mapping table 910. In this respect, it can be seen that the intention mapping table 910 is used to generate or determine intention information in preference to the NLP engine.

When the user pronounces "weather" similarly to "we the", there may occur a situation in which the user pronounces "we the" and then corrects the pronunciation as "weather". Accordingly, a first mapping item indicating mapping information between the text "we the" and the intention information "weather" may be included in the intention mapping table 910. When the first mapping item indicating the mapping information between text "we the" and intention information "weather" is added 15 times to the intention mapping table 910 because the user frequently pronounces "weather" similarly to "we the", the counter for the first mapping item may have a value of 15. In addition, a recommended application for the first mapping item may be a weather application.

When the user calls "laptop" as "notebook", a situation in which the user utters "notebook" and then correctly utters "laptop" may occur. Accordingly, a second mapping item indicating mapping information between the text "notebook" and the intention information "laptop" may be included in the intention mapping table 910. In addition, a recommended application for the second mapping item may be a shopping application that allows the user to check product information or price information on "laptop".

When the user calls "slipper" as "threbar", a situation in which the user utters "threbar" and then correctly utters "slipper" may occur frequently. Accordingly, a third mapping item indicating mapping information between the text "threbar" and the intention information "slipper" may be included in the intention mapping table 910. In addition, a recommended application for the third mapping item may not be set.

When the user wants to hear weather information and utters "I'm going out", the user may utter, for example, "current weather" correctly because the user has not checked desired weather information after the user has uttered "I'm going out". Accordingly, a fourth mapping item indicating mapping information between the text "I'm going out" and the intention information "current", "weather" may be included in the intention mapping table 910. In addition, a recommended application for the fourth mapping item may be a weather application.

FIG. 10 is an operational flowchart illustrating an example of step of determining the first intention information shown in FIG. 7 as intention information of a mapping item corresponding to the first text (S705).

Referring to FIG. 10, the processor 180 of the AI device 100 may determine whether the counter value of the mapping item corresponding to the first text is greater than a predetermined value (or a second reference counter value) (S1001).

The second reference counter value may be greater than the above-described first reference counter value. The first reference counter value may refer to a reference value for a counter value used to identify a mapping item to be used when mapping text to intention information among mapping items included in the intention mapping table. That is, a mapping item whose counter value is lower than the first reference counter value may be regarded as a mapping item whose reliability is yet low, and accordingly, may not used to map intention information of text converted from speech data.

As a result of the determination in step S1001, when the counter value of the mapping item corresponding to the first text is not greater than a predetermined value (or the second reference counter value), the processor 180 of the AI device 100 may recommend the intention information of the mapping item corresponding to the first text as first intention information (S1003).

Since the mapping item corresponding to the first text is included in the intention mapping table but the counter value of the corresponding mapping item is smaller than the second reference counter value, it cannot be certain that the first intention information corresponding to the first text is the intentional information of the corresponding mapping item. Accordingly, the processor 180 may recommend intention information of a mapping item corresponding to the first text as the first intention information through the output unit 150.

For example, it is assumed that the user has uttered "turn on the notebook", a mapping item that maps text "notebook" to intention information "laptop" is included in the intention mapping table, and the counter of the corresponding mapping item is greater than the first reference counter value and less than the second reference counter value. In this case, the processor 180 may directly recommend intention information by providing response "Do you want to turn on the power of the laptop?" through the sound output module 152. Alternatively, the processor 180 may indirectly recommend intention information by providing response "Shall I turn on the power of the laptop?" through the sound output module 152.

Then, the processor 180 of the AI device 100 may determine whether the user agrees with the recommended intention information (S1005).

The processor 180 may receive the user's reaction to the intention information recommended in step S1003 through the input unit 120, and determine whether the user explicitly or implicitly agrees with the recommended intention information based on the received user's reaction.

For example, when the user makes a positive utterance or shows a nod motion, it can be considered that the user explicitly agrees with the recommended intention information.

As a result of the determination in step S1005, when the user does not agree with the recommended intention information, the processor 180 of the AI device 100 may perform step S707 of generate intention information corresponding to the first text using the NLP engine.

Although a process proceeding from step S705 to step S707 is not shown in FIG. 7, according to an embodiment, when the user does not agree with the recommended intention information, step S707 of generating intention information corresponding to the first text may be performed using the NLP engine.

As a result of the determination in step S1005, when the user agrees with the recommended intention information, the processor 180 of the AI device 100 may determine the intention information of the mapping item as the first intention information (S1007).

As a result of the determination in step S1001, when the counter value of the mapping item corresponding to the first text is greater than a predetermined value (or the second reference counter value), the processor 180 of the AI device 100 may determine the intention information of the mapping item corresponding to the first text as first intention information (S1007).

Since the mapping item corresponding to the first text is included in the intention mapping table and the counter value of the corresponding mapping item is greater than the second reference counter value, it can be considered that the first intention information corresponding to the first text is the intentional information of the corresponding mapping item. Accordingly, the processor 180 may determine intention information of a mapping item corresponding to the first text as first intention information.

For example, it is assumed that the user has uttered "turn on the notebook", a mapping item that maps text "notebook" to intention information "laptop" is included in the intention mapping table, and the counter of the corresponding mapping item is greater than the second reference counter value. In this case, the processor 180 may determine the intention information of text "notebook" as "laptop", and perform step S607 of performing control corresponding to the determined intention information to turn on the power of the laptop.

The order of the steps shown in FIG. 10 is only an example, and the present disclosure is not limited thereto. That is, according to an embodiment, the order of some of the steps shown in FIG. 10 may be reversed to be performed. Also, in an embodiment, some of the steps shown in FIG. 10 may be performed in parallel. Further, only some of the steps shown in FIG. 10 may be performed.

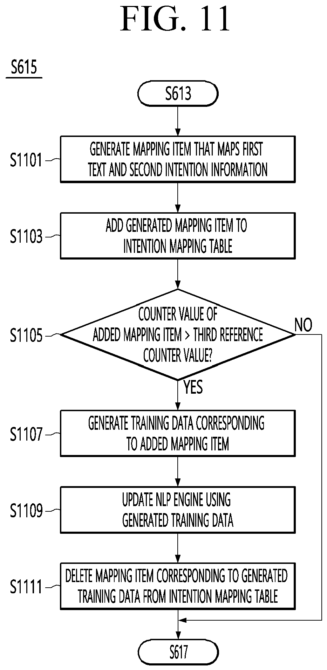

FIG. 11 is an operational flowchart illustrating an example of an operation of adding first text and second intention information corresponding to first speech data shown in FIG. 6 to an intention mapping table (S617).

Referring to FIG. 11, the processor 180 of the AI device 100 may generate a mapping item that matches the first text with the second intention information (S1101).

Then, the processor 180 of the AI device 100 may add the generated mapping item to the intention mapping table (S1103).

The processor 180 may determine whether a mapping item identical to the generated mapping item is included in the intention mapping table, and when the identical mapping item exists, increase the counter value of the corresponding mapping item by 1. On the other hand, when the identical mapping item does not exist in the intention mapping table, the processor 180 may add the corresponding mapping item to the intention mapping table, and set a counter value of the added mapping item to 1.

Then, the processor 180 of the AI device 100 may determine whether the counter value of the added mapping item is greater than a predetermined value (or a third reference counter value) (S1105).

The third reference counter value may be equal to or greater than the above-described second reference counter value. The second reference counter value may refer to a reference value for a counter value used to identify a mapping item requiring a user's consent when mapping intention information corresponding to text among mapping items included in the intention mapping table. That is, a mapping item whose counter value is lower than the second reference counter value may be regarded as an item whose reliability is not yet secured, accordingly requiring the user's consent when mapping intention information of text converted from speech data.

As a result of the determination in step S1105, when the counter value of the added mapping item is not greater than a predetermined value (or the third reference counter value), the processor 180 of the AI device 100 may perform a step (S617) of performing control corresponding to the second intention information.

As a result of the determination in step S1105, when the counter value of the added mapping item is greater than the predetermined value (or the third reference counter value), the processor 180 of the AI device 100 may generate training data corresponding to the added mapping item (S1107).

The generated training data refers to training data used for training of an NLP engine that outputs intention information corresponding to text when the text is input, and may include text and intention information included in a corresponding mapping item.

Then, the processor 180 of the AI device 100 may update the NLP engine using the generated training data (S1109).

The processor 180 of the AI device 100 may update the NLP engine stored in the memory 170 by using the training data generated directly or through the learning processor 130.

When the AI device 100 uses the NLP engine stored in the memory 240 of the AI server 200 in order to generate the intention information of the text, the processor 180 of the AI device 100 may transmit the generated training data to the AI server 200 through the communication unit 110. In addition, the AI server 200 may update the NLP engine by using the training data received from the AI device 100.

Since the NLP engine is trained by using the training data generated from the mapping item having a counter value greater than the third reference counter value, the updated NLP engine may more accurately generate the intention information of speech of which recognition has failed.

In an embodiment, the processor 180 of the AI device 100 may accumulate and store the generated training data in the memory 170, and when the stored training data reaches a predetermined amount, update the NLP engine by using the accumulated training data.

Then, the processor 180 of the AI device 100 may delete a mapping item corresponding to the generated training data from the intention mapping table (S1111).

Since the NLP engine is updated using the generated training data, the processor 180 of the AI device 100 may accurately generate intention information using the NLP engine even when there is no mapping item corresponding to the generated training data in the intention mapping table. Accordingly, the processor 180 may delete unnecessary mapping items by deleting a mapping item corresponding to the training data generated in the intention mapping table from the intention mapping table.

In an embodiment, when a recommended application is included in a mapping item corresponding to the generated training data, the processor 180 may not delete the corresponding mapping item from the intention mapping table. Further, the mapping item that has not been deleted may be used to determine a recommended application even after the NLP engine is updated later.

Then, the processor 180 of the AI device 100 may perform a step of performing a control corresponding to the second intention information (S617).

The order of the steps shown in FIG. 11 is only an example, and the present disclosure is not limited thereto. That is, according to an embodiment, the order of some of the steps shown in FIG. 11 may be reversed to be performed. Further, in an embodiment, some of the steps shown in FIG. 11 may be performed in parallel. Further, only some of the steps shown in FIG. 11 may be performed.

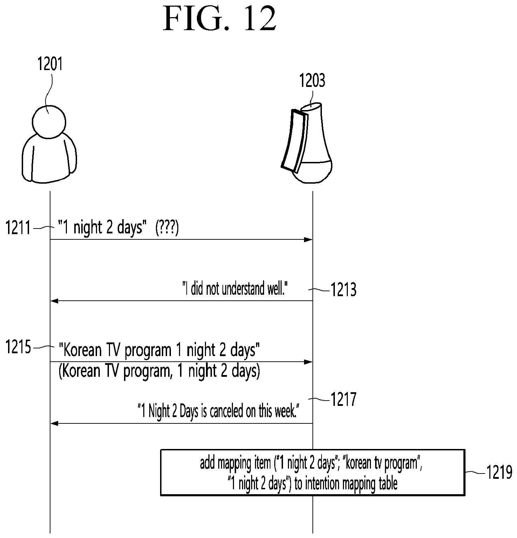

FIG. 12 is a diagram illustrating an embodiment of the present disclosure.

Referring to FIG. 12, it is assumed that the user 1201 has uttered "1 night 2 days" 1211 in order to ask for information on today's Korean TV program with respect to an AI device 1203. The AI device 1203 may convert a speech (first speech data) uttered by user 1201 into text "1 night and 2 days", but may fail to generate intention information therefor. In addition, the AI device 1203 may provide a response "I did not understand well" (1213).

The user 1201 may specifically utter "Korean TV program 1 night 2 days" 1215 with respect to the AI device 1203 within a predetermined time period (e.g., within 5 seconds). The AI device 1203 may accurately convert the speech re-uttered by user 1201 (second speech data) into text "Korean TV program 1 night 2 days", and generate "Korean TV program" and "1 Night 2 days" as intention information therefor. Further, the AI device 1203 may provide a response "1 Night 2 Days is canceled this week" as information on Korean TV program '1 Night 2 Days' (1217).

The first uttered speech (first speech data) of the user 1201 "1 night 2 days"

(1211) is corrected to the second uttered speech (second speech data), "Korean TV program 1 night 2 days", and therefore, it can be considered that the intention information of the first uttered speech (first speech data) means "Korean TV program" and "1 night and 2 days", which are the intention information of the uttered speech (second speech data). Accordingly, the AI device 1203 may add mapping items ("1 night 2 days"; "Korean TV program", "1 night 2 days") to the intention mapping table (1219).

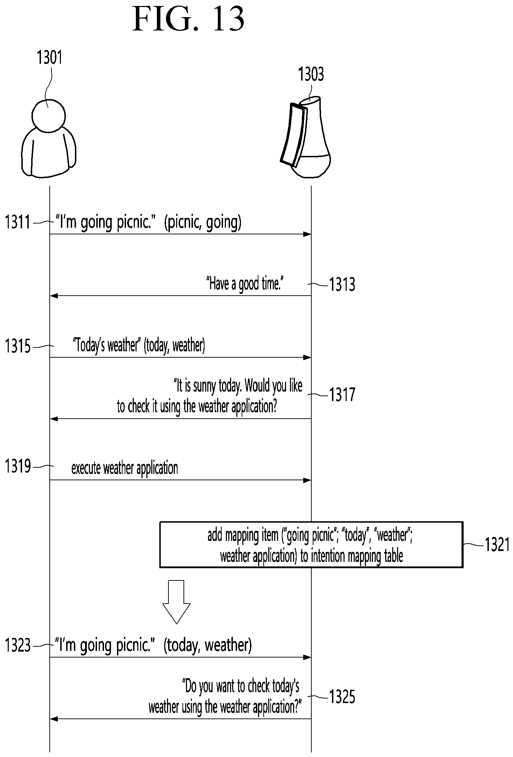

FIG. 13 is a diagram illustrating an embodiment of the present disclosure.

Referring to FIG. 13, it is assumed that a user 1301 has uttered "I'm going picnic" (1311) to check the current weather for a plan to go on a picnic with respect to the AI device 1303. The AI device 1303 may convert a speech uttered by the user 1301 (first speech data) into text "I'm going picnic", and determine "picnic" and "going" as intention information for the speech. Then, the AI device 1303 may provide a response 1313 "Have a good time."

However, since the response 1313 of the AI device 1303 is not an answer desired by the user 1301, the user 1301 may utter 1315 "today's weather" to the AI device 1303 within a predetermined time period (for example, within 5 seconds). The AI device 1303 may convert the speech re-uttered by the user 1301 (second speech data) into text "today weather" and generate "today" and "weather" as intention information therefor. Further, the AI device 1303 may provide a response 1317 "It is sunny today. Would you like to check it using the weather application?" as today's weather information. That is, the AI device 1303 may suggest a weather application as a recommended application.

The user 1301 may acquire weather information by executing the weather application suggested by the AI device 1303 (1319). The AI device 1303 may determine that the user 1301 has executed the weather application, which is a recommended application, and add mapping items ("going picnic"; "today", "weather"; weather application) to the intention mapping table (1321) as the weather application has been executed.

Thereafter, when the user 1301 has uttered "I'm going picnic" to the AI device 1303 (1323), the AI device 1303 may determine "today" and "weather" as the intention information of the uttered speech 1323 based on the mapping items ("going picnic"; "today", "weather"; weather application) added to the intention mapping table, and determine a weather application as a corresponding recommended application. Then, the AI device 1303 may provide a response "Do you want to check today's weather using the weather application?" to the user 1301 (1325) to suggest a weather application as a recommended application.

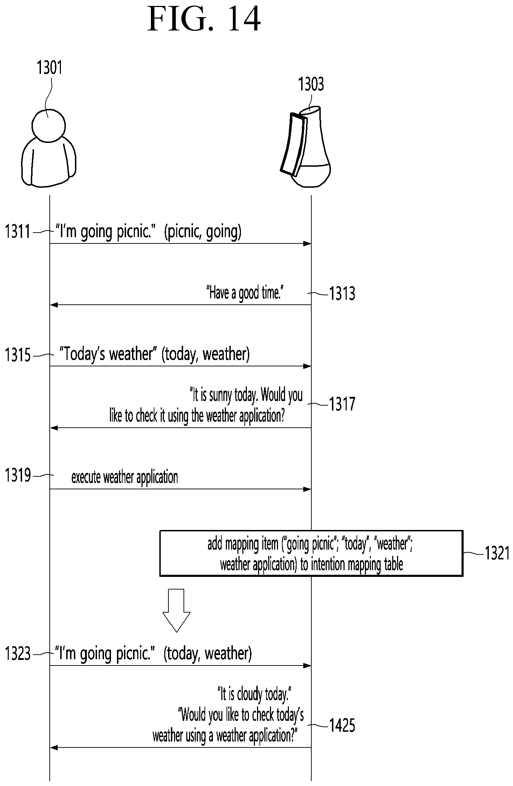

FIG. 14 is a diagram illustrating an embodiment of the present disclosure.

A description overlapping that given with reference to FIG. 13 will be omitted.

Referring to FIG. 14, mapping items ("going picnic"; "today", "weather"; weather application) are added to the intention mapping table of the AI device 1303.

When the user 1301 has uttered "I'm going picnic" to the AI device 1303 (1423), the AI device 1303 may determine "today" and "weather" as the intention information of the uttered speech 1423 based on the mapping items ("going picnic"; "today", "weather"; weather application) added to the intention mapping table, and determine a weather application as a corresponding recommended application. Then, the AI device 1303 may provide a response 1425, such as "It is cloudy today. Would you like to check weather using a weather application?", to the user 1301 to provide today's weather information and at the same time suggest the weather application as a recommended application.

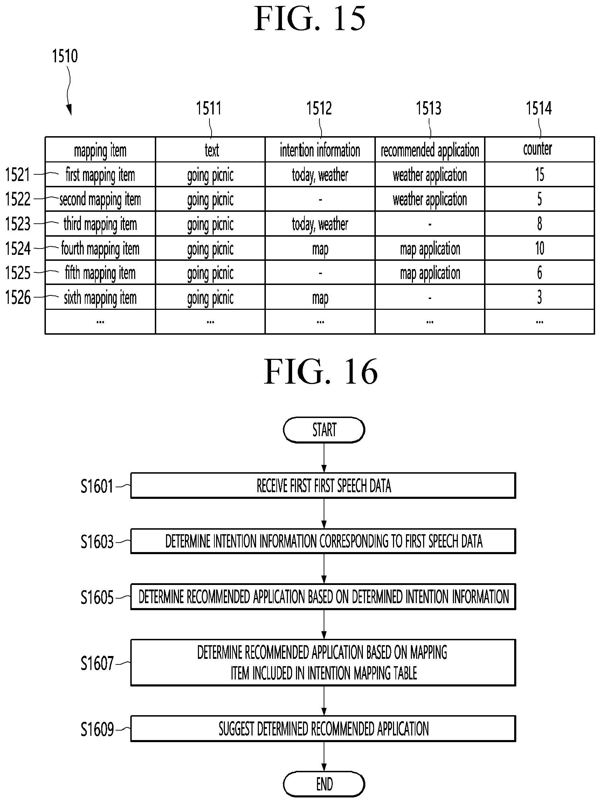

FIG. 15 is a diagram illustrating an example of an intention mapping table according to an embodiment of the present disclosure.

Referring to FIG. 15, an intention mapping table 1510 may include a text 1511, intention information 1512, a recommended application 1513, and a counter 1514. Mapping items included in the intention mapping table 1510 may include a mapping item to which the text 1511 and the intention information 1512 are mapped, a mapping item or the text 1511 to which the text 1511 and the recommended application 1513 are mapped, and a mapping item to which the intention information 1512 and the recommended application 1513 are mapped.

The processor 180 of the AI device 100 may determine whether there is an application executed within a predetermined time period after the reception of the first speech data, regardless of whether a recommended application is provided, and add a mapping item including information on an application, executed within the predetermined time period, to the intention mapping table. When a mapping item identical to the mapping item to be added is already included in the intention mapping table, the processor 180 may increase a counter value of the corresponding mapping item.

The predetermined time period or a starting point of the predetermined time period may vary depending on whether second speech data is received after the first speech data is received. For example, the processor 180 may determine whether there is an application executed within 5 seconds after the first speech data has been received. However, when the second speech data is received because the recognition of the first speech data has failed, the processor 180 may determine whether there is an application executed within 5 seconds after the second speech data has been received. Alternatively, when the second speech data is received because the recognition of the first speech data has failed, the processor 180 may determine whether there is an application executed within 10 seconds after the first speech data has been received. The effect due to changing of a predetermined time period depending on whether the second voice data is received may be same as the effect due to changing of the starting point of the predetermined time period.

A first mapping item 1521 is a mapping item in which text "going picnic" is mapped to intention information "today", "weather" and a weather application as a recommended application, and has the counter value of 15. For example, the first mapping item 1521 may be generated or its counter value may be increased when the user has uttered "I'm going picnic", re-uttered "today's weather" within a predetermined time period and executed a weather application (recommended or non-recommended application).

A second mapping item 1522 is a mapping item in which text "going picnic" is mapped to a weather application as a recommended application, and has the counter value of 5. For example, the second mapping item 1522 may be generated or its counter value may be increased when the user has uttered "I'm going picnic" and executed a weather application (recommended or non-recommended application) within the predetermined time period.

A third mapping item 1523 is a mapping item in which text "going picnic" is mapped to intention information "today" and "weather", and has the counter value of 8. For example, the third mapping item 1523 may be generated or its counter value may be increased when the user has uttered "I'm going picnic" and re-uttered "today's weather" within a predetermined time period.

A fourth mapping item 1524 is a mapping item in which text "going picnic" is mapped to intention information "map" and a map application as a recommended application, and has the counter value of 10. For example, the fourth mapping item 1524 may be generated or its counter value may be increased when the user has uttered "I'm going picnic", re-uttered "map" within a predetermined time period and executed a map application (recommended or non-recommended application).

A fifth mapping item 1525 is a mapping item in which text "going picnic" is mapped to a map application as a recommended application, and has the counter value of 6. For example, the fifth mapping item 1525 may be generated or its counter value may be increased when the user has uttered "I'm going picnic" and executed a map application within a predetermined time period.

A sixth mapping item 1526 is a mapping item in which text "going picnic" is mapped to intention information "map" and "weather", and has the counter value of 3. For example, the sixth mapping item 1526 may be generated or its counter value may be increased when the user has uttered "I'm going picnic" and then re-uttered "map" within a predetermined time period.

FIG. 16 is an operational flowchart illustrating a method of providing a recommended application according to an embodiment of the present disclosure.

Referring to FIG. 16, the processor 180 of the AI device 100 may receive first speech data (S1601).

Then, the processor 180 of the AI device 100 may determine intention information corresponding to the first speech data using an intention mapping table or a Natural Learning Processing (NLP) engine (S1603).

The processor 180 may convert the first speech data into a first text using an STT engine, and determine intention information corresponding to the first text based on the mapping items included in the intention mapping table or the NLP engine.

The step of determining the intention information corresponding to the first speech data (S1603) may correspond to the step of generating the first intention information corresponding to the first speech data (S603) which is shown in FIG. 6. That is, the processor 180 may determine the intention information by using a mapping item corresponding to the first text and having a counter value greater than a predetermined reference counter value, from among the mapping items included in the intention mapping table. On the other hand, when a corresponding mapping item does not exist, the processor 180 may determine the intention information corresponding to the first speech data using the NLP engine.

Then, the processor 180 of the AI device 100 may determine a recommended application based on the determined intention information (S1605).

The recommended application may mean an application having high relevance to the determined intention information. The processor 180 may not determine a recommended application when there is no application suitable for the determined intention information. For example, when the determined intention information is "today" and "weather", the processor 180 may determine a weather application as the recommended application.

Then, the processor 180 of the AI device 100 may determine a recommended application based on the mapping items included in the intention mapping table (S1607).

The processor 180 may determine a recommended application included in a mapping item corresponding to the first text and having a counter value greater than a fourth reference counter value, from among the mapping items included in the intention mapping table, as the recommended application. In a case where the intention mapping table 1510 shown in FIG. 15 is taken as an example, when the first text is "I'm going picnic" and the fourth reference counter value is 8, the processor 180 may determine a weather application and a map application included in the first mapping item 1521 and the fourth mapping item 1524 as recommended applications. Then, the processor 180 of the AI device 100 may suggest the determined recommended applications (S1609).

The processor 180 may suggest a recommended application determined based on intention information and a recommended application determined based on a mapping item. When a plurality of applications is determined as recommended applications, the processor 180 may suggest (or provide) all of the plurality of recommended applications. When the processor 180 suggests a plurality of recommended applications, the processor 180 may output an interface for selecting an application to be executed from among the plurality of recommended applications.

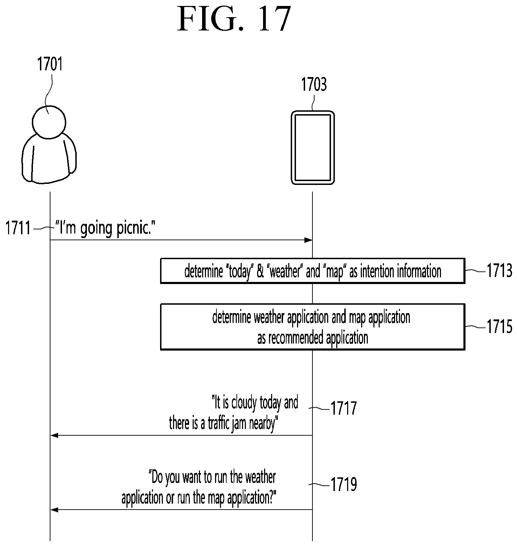

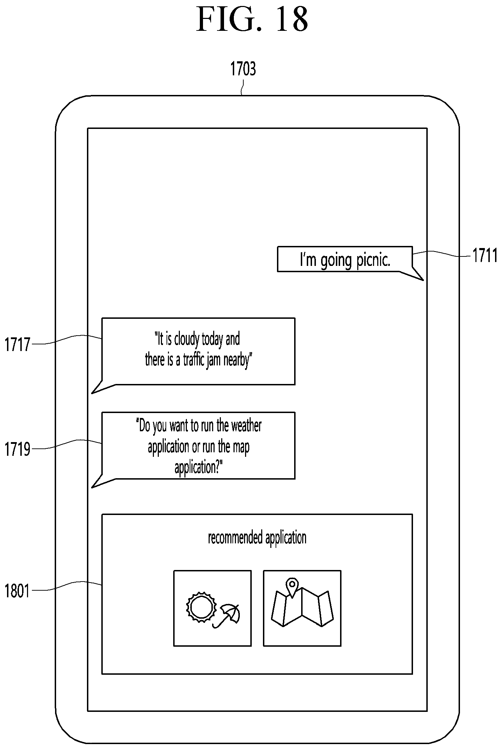

FIGS. 17 and 18 are diagrams illustrating an embodiment of recognizing a speech using the intention mapping table shown in FIG. 15.

Referring to FIG. 17, it is assumed that a user 1701 has uttered "I'm going picnic" (1711) to check the current weather for a plan to go on a picnic with respect to the AI device 170. The AI device 1703 may convert a speech (first speech data) uttered by the user 1701 into text "I'm going picnic", and determine "today" & "weather" and "map" as intention information corresponding to text "I'm going picnic" based on the NLP engine or the intention mapping table 1510 shown in FIG. 15 (1713).

Further, the AI device 1703 may determine, as recommended applications, a weather application and a map application included in a first mapping item 1521 and a fourth mapping item 1524, which correspond to text "I'm going picnic" and have a counter value greater than a predetermined counter value of 8, from among mapping items included in the intention mapping table 1510 (1715).

Further, the AI device 1703 may provide a response 1717 such as "It is cloudy today, and there is a traffic jam nearby" as today's weather information and surrounding information (or map information) based on the determined intention information.

Further, the AI device 1703 may suggest a recommended application, such as "Do you want to run the weather application or run the map application?" based on the determined recommended application (1719).

Referring to FIG. 18, when suggesting a recommended application, the AI device 1703 may display an icon list 1801 corresponding to the recommended applications. Then, the AI device 1703 may execute an application corresponding to an icon selected from the icon list 1801.

In another embodiment, unlike the embodiment shown in FIGS. 17 and 18, when a predetermined counter value is 10, the AI device 1703 may determine, as a recommended application, a weather application included in the first mapping item 1521 which corresponds to text "I'm going picnic" and has a counter value greater than the predetermined counter value of 10, from among mapping items included in the intention mapping table 1510 (1715).

According to an embodiment of the present disclosure, the above-described method may be implemented with codes readable by a computer on a medium in which a program is recorded. The computer-readable medium includes all kinds of recording devices in which data readable by a computer system is stored. Examples of the computer readable medium may include a hard disk drive (HDD), a solid state disk (SSD), a silicon disk drive (SDD), a ROM, a RAM, a CD-ROM, a magnetic tape, a floppy disk, an optical data storage device, and the like.

Advantageous aspects of the present disclosure can be phrased as follows:
Aspect 1. An artificial intelligence (AI) apparatus for recognizing speech comprising:
   a memory configured to store an intention mapping table including a mapping item that maps text and intention information;
   a processor configured to receive first speech data, generate first intention information corresponding to the first speech data using the intention mapping table and a natural language processing (NLP) engine, receive second speech data when speech recognition for the first speech data has failed, generate second intention information corresponding to the second speech data, and add a first mapping item including the first text converted from the first speech data and the second intention information to the intention mapping table when speech recognition for the second speech data has succeeded.
Aspect 2. The AI device of aspect 1, wherein the processor is configured to:
   determine that the speech recognition for the first speech data has failed when generation of the first intention information has failed or reliability of the generated first intention information is lower than a first reference reliability value; and
   determine that the speech recognition for the second speech data has failed when generation of the second intention information has failed or reliability of the generated second intention information is lower than a second reference reliability value.
Aspect 3. The AI device of aspect 2, wherein the processor is configured to:
   perform a control corresponding to the generated first intention information when speech recognition for the first speech data has succeeded; and
   perform a control corresponding to the generated second intention information when speech recognition for the second speech data has succeeded.
Aspect 4. The AI device of aspect 1, wherein the second speech data means speech data received within a predetermined time period after the first speech data has been received.
Aspect 5. The AI device of aspect 1, wherein the processor is configured to generate the second intention information by using at least one of the intention mapping table and the NLP engine.
Aspect 6. The AI device of aspect 5, wherein the processor is configured to add the first mapping item to the intention mapping table only when the second intention information is generated using the NLP engine.
Aspect 7. The AI device of aspect 1, wherein the intention mapping table further includes a counter corresponding to each mapping item, and
   wherein the processor is configured to increase a counter value for the first mapping item in the intention mapping table by 1 when the first mapping item is included in the intention mapping table in a case of adding the first mapping item to the intention mapping table.
Aspect 8. The AI device of aspect 7, wherein the processor is configured to determine intention information of the second mapping item as the first intention information, when a second mapping item having a counter value equal to or greater than a first reference counter value and corresponding to the first text converted from the first speech data is included in the intention mapping table.
Aspect 9. The AI device of aspect 8, wherein the processor is configured to recommend the intention information of the second mapping item as the first intention information when the counter value of the second mapping item is not greater than the second reference counter value, and determine the recommended intention information as the first intention information when receiving a user's explicit consent or implied consent for the suggested intention information, and
   wherein the second reference counter value is greater than the first reference counter value.
Aspect 10. The AI device of aspect 9, wherein the processor is configured to determine the intention information of the second mapping item as the first intention information when the counter value of the second mapping item is greater than a second reference counter value.
Aspect 11. The AI device of aspect 10, wherein the processor is configured to generate training data corresponding to the second mapping item and update the NLP engine using the generated training data when the counter value of the second mapping item is greater than a third counter value, and
   wherein the third reference counter value is greater than the second reference counter value.
Aspect 12. The AI device of aspect 11, wherein the processor is configured to delete the second mapping item from the intention mapping table after the training data has been generated.
Aspect 13. The AI device of aspect 1, wherein the intention mapping table further includes a recommended application,
   wherein the processor is configured to suggest a recommended application corresponding to the second intention information, determine that speech recognition for the second speech data has succeeded when the recommended application is executed, and add the first mapping item including the recommended application to the intention mapping table.
Aspect 14. A method for recognizing speech comprising:
   receiving first speech data;
   generating first intention information corresponding to the first speech data using an intention mapping table including a mapping item that maps text and intention information and a natural language processing (NLP) engine;
   receiving second speech data when speech recognition for the first speech data has failed;
   generating second intention information corresponding to the second speech data; and
   adding a mapping item including first text converted from the first speech data and the second intention information to the intention mapping table when speech recognition for the second speech data has succeeded.
Aspect 15. A recording medium recording a method of recognizing speech, the method comprising:
   receiving first speech data;
   generating first intention information corresponding to the first speech data using an intention mapping table including a mapping item that maps text and intention information and a natural language processing (NLP) engine;
   receiving second speech data when speech recognition for the first speech data has failed;
   generating second intention information corresponding to the second speech data; and adding a mapping item including first text converted from the first speech data and the second intention information to the intention mapping table when speech recognition for the second speech data has succeeded.

## Claims

1. An artificial intelligence, AI, apparatus for recognizing speech, comprising:
a memory;
a display; and
a processor configured to:
receive first speech data from a user, generate text converted from the first speech data, generate first intention information corresponding to the text based on the user's previous uttered speech, generate a first mapping item including the text, the first intention information and a first recommended application corresponding to the first intention information, control the memory to store an intention mapping table including the first mapping item, and control the display to output the first recommended application in accordance with the first speech data.

2. The AI apparatus of claim 1, wherein the processor is further configured to:
generate second intention information which corresponds to the text based on the user's previous uttered speech,
generate a second mapping item including the text, the second intention information and a second recommended application corresponding to the second intention information, and
control the memory to store the second mapping item into the stored intention mapping table.

3. The AI apparatus of claim 2, wherein the processor is further configured to:
receive second speech data from the user within a predetermined time period,
determine the first or second recommended application to be output through the display based on the second speech data, and
control the display to output the determined first or second recommended application in accordance with the first speech data.

4. The AI apparatus of claim 1, wherein the processor is further configured to generate a voice response which corresponds to the first speech data.

5. The AI apparatus of claim 1, wherein the processor is further configured to control a speaker to output a voice response to directly or indirectly recommend intention information corresponding to the first speech data.

6. The AI apparatus of claim 5, wherein the voice response is generated by a natural language processing, NLP, engine.

7. The AI apparatus of claim 5, wherein the processor is further configured to determine whether the user agrees with the recommended intention information by receiving the user's reaction.

8. The AI apparatus of claim 2, wherein the stored intention mapping table includes the plurality of mapping items with respect to same text converted from same speech data uttered by the user.

9. The AI apparatus of claim 1 or 2, wherein, when there is the plurality of the first or second recommended applications, the processor is further configured to output an interface for selecting a recommended application from the plurality of the first or second recommended applications to be executed.

10. The AI apparatus of claim 1 or 2, wherein, when there is the plurality of the first or second recommended applications, the processor is further configured to output all of the first or second recommended applications.

11. The AI apparatus of claim 1 or 2, wherein the processor is configured not to set the first or second recommended application with respect to the first speech data based on the text or the first or second intention information.
